## Europäisches Patentamt

## European Patent Office

## Office européen des brevets

(11) Veröffentlichungsnummer: **0 090 459**
B1

(12)

# EUROPÄISCHE PATENTSCHRIFT

(45) Veröffentlichungstag der Patentschrift:
03.07.85

(51) Int. Cl.⁴: **G 11 B 17/02**, G 11 B 17/04

(21) Anmeldenummer: 83200396.6

(22) Anmeldetag: 23.03.83

(54) **Plattenspieler.**

(30) Priorität: 27.03.82 DE 3211358
27.03.82 DE 3211359

(43) Veröffentlichungstag der Anmeldung:
05.10.83 Patentblatt 83/40

(45) Bekanntmachung des Hinweises auf die Patenterteilung:
03.07.85 Patentblatt 85/27

(84) Benannte Vertragsstaaten:
DE FR GB IT

(56) Entgegenhaltungen:
FR - A - 2 428 296
GB - A - 2 081 487
US - A - 3 480 282
US - A - 4 092 671

(73) Patentinhaber: **Philips Patentverwaltung GmbH,
Billstrasse 80, D-2000 Hamburg 28 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB IT**

(72) Erfinder: **Eisemann, Kurt, Moltkestrasse 36,
D-1000 Berlin 45 (DE)**

(74) Vertreter: **Kupfermann, Fritz-Joachim et al, Philips
Patentverwaltung GmbH
Billstrasse 80 Postfach 10 51 49,
D-2000 Hamburg 28 (DE)**

ACTORUM AG

## Beschreibung

Die Erfindung bezieht sich auf einen Plattenspieler für eine starre Informationsträgerplatte mit einem in einem Gestell drehbar gelagerten Plattenteller, der durch einen mit dem Gestell schwenkbar verbundenen Deckel abschliessbar ist, welcher Deckel einen Plattenandrücker trägt, der beim Schwenken des Deckels in Richtung des Plattentellers die Platte federnd gegen den Plattenteller drückt.

Aus der DE-A-2921410 ist ein Plattenspieler bekannt, mit dem eine auf einem Plattenteller liegende starre Informationsträgerplatte abgespielt werden kann. Die Informationsträgerplatte liegt im Betrieb fest auf dem Plattenteller, und dieser wird von einem Antriebsmotor drehend angetrieben. An dem Deckel des Gerätes ist ein Plattenandrücker angeordnet, der mit einem Magnetring federnd auf die Informationsträgerplatte aufsetzbar ist. Beim Schliessen des Gerätedeckels setzt sich der Magnetring auf die Platte auf, und während des Spielvorganges hält der Magnetring des Plattenandrückers die Platte fest. Dies ist dadurch möglich, dass der Plattenandrücker in dem Gerätedeckel drehbar gelagert ist. Dies erfordert einen besonderen mechanischen Aufwand und belastet die Drehbewegung des Plattentellers.

Um ein völlig unbelastetes Drehen des Plattentellers zusammen mit der Informationsträgerplatte zu ermöglichen, wäre es vorteilhaft, den Deckel mit dem Plattenandrücker nach dem Andrücken wieder ein wenig von dem Plattenteller wegzuschwenken. Bei dem bekannten Plattenspieler würde jedoch wieder unmittelbar nach einer derartigen Bewegung ein Zurückschwenken des Deckels und damit ein abermaliges Andrücken der Platte erfolgen, wodurch bei einer mit hoher Geschwindigkeit drehenden Informationsträgerplatte Beschädigungen an dieser Informationsträgerplatte entstehen könnten.

Es ist Aufgabe der Erfindung, einen Plattenspieler für eine starre Informationsträgerplatte zu schaffen, bei dem der Plattenandrücker die Drehung des Plattentellers nicht beeinträchtigt und Beschädigung der Platte durch den Plattenandrücker vermieden wird.

Die gestellte Aufgabe wird nach der Erfindung dadurch gelöst, dass der Schliessvorgang des Deckels bis in die für den Spielbetrieb vorgesehene Stellung in zwei Bewegungsphasen bis zu einer Andrück- und einer Anhebestufe abläuft, und zwar derart, dass der Deckel mit mindestens einem Anschlagelement in einer Andrückphase auf den Plattenteller hin schwenkbar ist bis in die Andrückstufe, in der der Plattenandrücker die Platte gegen den Plattenteller drückt, wobei der Deckel in einer nach dem Erreichen der Andrückstufe sich vollziehenden anschliessenden Anhebephase durch mit dem Deckel gekuppelte Federmittel vom Plattenteller wieder wegschwenkt bis in die Anhebestufe, in der der Deckel mittels Anschlagmitteln positioniert wird und in welcher Anhebestufe der Plattenandrücker die Platte freigibt und ein gegenüber dem Gestell beweglicher Riegel in die Niederschwenkbahn des Anschlagelementes gelangt, wodurch der Riegel den Deckel daran hindert, in die Andrückstufe zurückzukehren.

Wenn sich der Deckel des Plattenspielers nach dem Andrücken der Platte während der Hebephase durch die Federmittel wieder so weit von der Informationsträgerplatte entfernt hat, dass der Plattenandrücker sich abheben konnte, dann verhindert der inzwischen in der Andrückstellung befindliche Riegel ein erneutes Zurückführen des Deckels in die Andrückstufe, wodurch der Plattenandrücker auf die Informationsträgerplatte aufsetzen würde. Ein erneutes Andrücken ist erst möglich, wenn der Deckel zuvor in die geöffnete Stellung gebracht worden ist.

Nach einer weiteren Ausführungsform der Erfindung ist vorgesehen, dass am Gestell ein Träger angeordnet ist, der in der Andrückphase mit dem Deckel auf den Plattenteller geschwenkt wird und der eine Verriegelungsplatte trägt, die in der Andrückstufe mittels eines mit dem Gestell verbundenen Verriegelungselementes verriegelt wird, welcher Träger einen Teil der Anschlagmittel aufweist, die das erneute Anheben in der Anhebephase des Deckels auf dem Weg bis zum Erreichen der Anhebestufe begrenzen und den Deckel in der Anhebestufe positioniert halten.

Auf diese Weise wird ein Plattenspieler erhalten, bei dem der Träger nach der Verriegelung in der Andrückstufe den Deckel während der nachfolgenden Anhebephase frei schwenken lässt, wodurch der Plattenandrücker sich von der Platte abhebt, bis die Anschlagmittel auf dem Träger den Deckel in der Endstellung positionieren.

In diesem Zusammenhang ist eine Ausführungsform der Erfindung dadurch gekennzeichnet, dass das Verriegelungselement den Riegel trägt und in der Andrückphase des Deckels mittels der Verriegelungsplatte das Verriegelungselement derart verschoben wird, dass der Riegel zunächst in eine Wartestellung bewegt und in der folgenden Anhebephase unter Federkraft so zurückgestellt wird, dass er sich unterhalb der Anschlagelemente schiebt und den Niederdrückweg des Deckels bis in die Andrückstufe blockiert. Auf diese Weise wird gewährleistet, dass während der Andrückphase des Deckels der Riegel immer rechtzeitig aus der Schwenkbahn des Anschlagelementes auf dem Deckel in die Andrückstellung gebracht wird, wodurch der Deckel unbehindert in Richtung des Plattentellers schwenken kann, während der Riegel automatisch in seine der Anhebestufe entsprechende Stellung zurückgebracht wird.

Die Ausbildung des Riegels kann auf verschiedene Weisen vorgesehen werden. Bei einer Ausführungsform der Erfindung ist vorgesehen, dass der Riegel an einem federnd ausschwenkbaren Verriegelungselement ausgebildet ist. Eine derartige Ausführungsform bietet die Möglichkeit, dass die Bewegung des Riegels aus der Stellung für die Andrückstufe in die Stellung für die Anhebestufe erst erfolgen kann, nachdem das Verriegelungselement angehoben worden ist. Der Riegel kann aber auch ganz einfach als Federdraht ausgebildet sein.

Eine andere Ausführungsform der Erfindung ist dadurch gekennzeichnet, dass das Verriegelungselement mit einer Taste versehen ist zum Entriegeln des Trägers und zum Öffnen des Deckels. Auf diese Weise kann mittels der Taste der Deckel geöffnet sowie der Riegel auf dem Verriegelungselement verschoben werden.

Nach einer anderen Ausführungsform der Erfindung ist vorgesehen, dass der Riegel an zwei einander gegenüberliegenden Seiten eine erste und eine zweite Wand aufweist, wobei die erste Wand des Riegels in der Anhebestufe die Verriegelungsplatte des Trägers verriegelt hält und beide Wände in der Anhebestufe zwischen dem Unterrand des Anschlagelementes und einer Verriegelungskante der Verriegelungsplatte zu liegen kommen und dadurch verhindern, dass der Deckel in die Andrückstufe zurückkehrt. Damit wird ein Riegel erhalten, der zur Verriegelung des Trägers und danach des Deckels dient sowie zur Vermeidung einer Bewegung des Deckels aus der Endstellung.

In unserer am 23.3.1983 eingereichten Anmeldung EP-A-90458 wird ein Plattenspieler beansprucht, bei dem der Schliessvorgang des Deckels in zwei Bewegungsphasen abläuft und die Platte mittels federnder Zentrierelemente festgehalten wird.

Die vorliegende Erfindung wird anhand zweier in der Zeichnung dargestellter Ausführungsbeispiele näher erläutert. Es zeigen:

Fig. 1 eine Seitenansicht eines Teils eines erfindungsgemässen Plattenspielers,

Fig. 2 bis 4 teilweise in Seitenansicht und teilweise im Schnitt für die Erfindung wichtige Teile des Plattenspielers nach Fig. 1 in drei Stellungen,

Fig. 5 eine Seitenansicht eines Teils einer zweiten Ausführungsform eines erfindungsgemässen Plattenspielers,

Fig. 6 und 7 einen Teil des Plattenspielers nach Fig. 5 in zwei weiteren Stellungen.

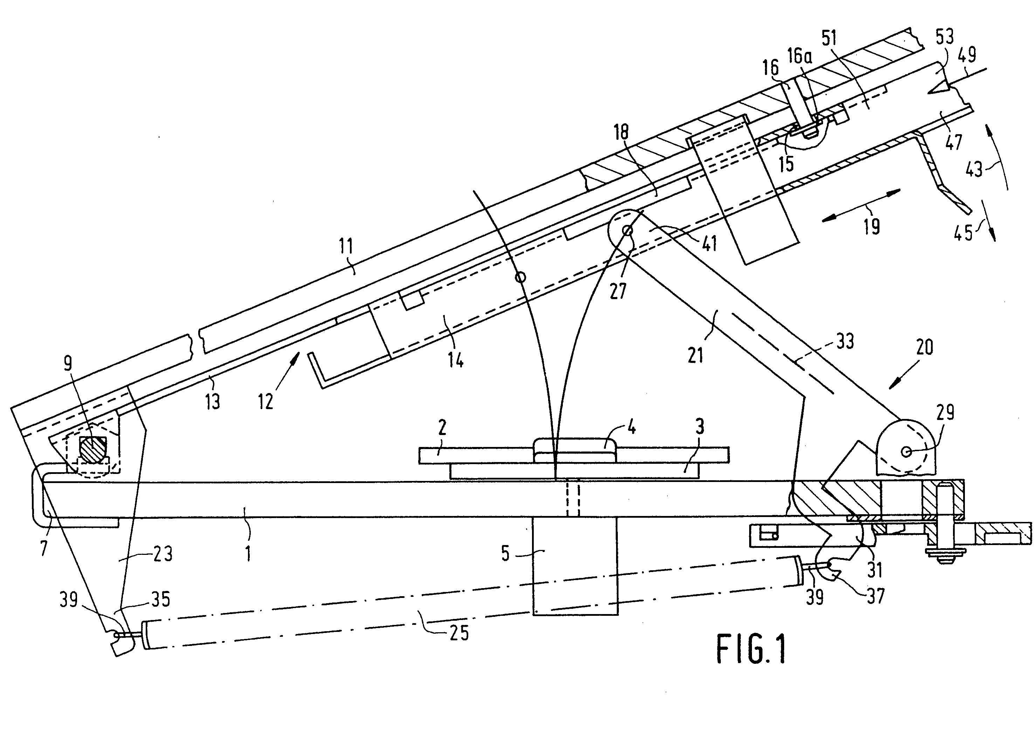

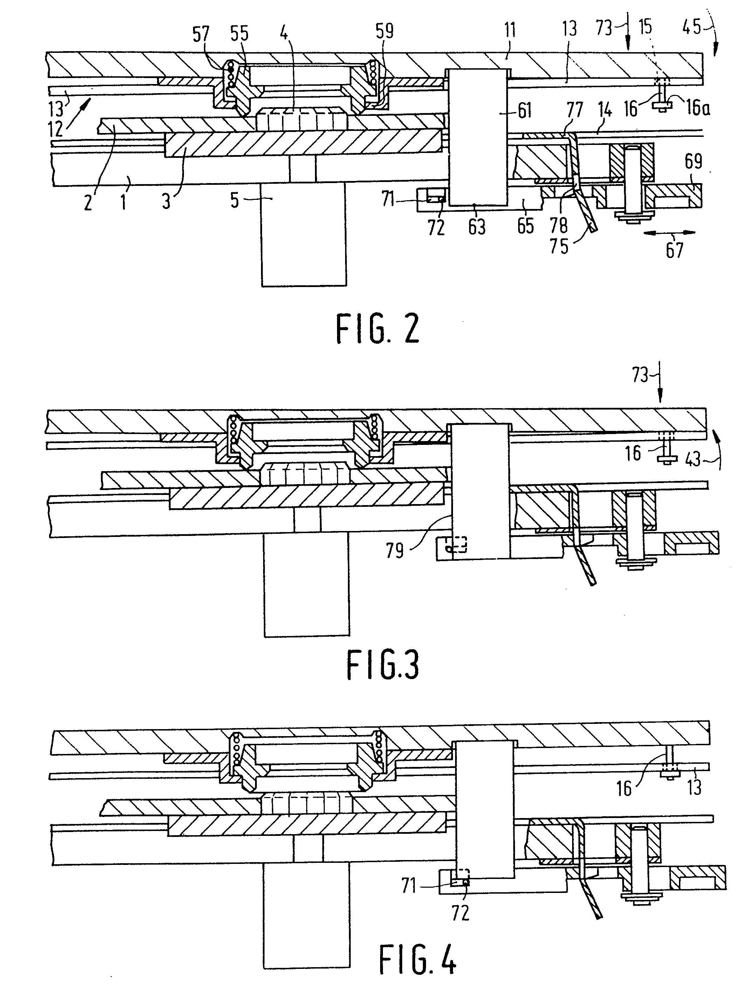

Auf einem Gestell 1 eines in Fig. 1 dargestellten Plattenspielers zum Abspielen einer starren Informationsträgerplatte 2 ist ein Plattenteller 3 und eine auf schematische Weise dargestellte Plattenzentrierung 4 drehbar gelagert. Der drehbare Plattenteller 3 kann mit Hilfe eines unter dem Plattenteller liegenden Antriebsmotors 5 angetrieben werden. In der Nähe einer Seite 7 des Gestells 1 ist mittels eines mit dem Gestell verbundenen Gelenkes 9 ein Deckel 11 schwenkbar gelagert. Der Deckel 11 ist zum Abschliessen des Plattentellers 3 aus der in Fig. 1 dargestellten geöffneten Lage in eine in Fig. 4 dargestellte, nahezu parallel zu dem Plattenteller 3 liegende Endlage schwenkbar.

Das Gelenk 9 dient zugleich zur schwenkbaren Lagerung eines Trägers 12, der eine Trägerplatte 13 und einen Schlitten 14 umfasst. Die Trägerplatte 13 weist zwei Löcher 15 auf, durch die mit dem Deckel 11 fest verbundene Stifte 16 hindurchragen, die auf der vom Deckel 11 abliegenden Seite mit Köpfen versehen sind. Die Löcher 15 mit den angrenzenden Wandteilen der Trägerplatte 13 und die Stifte 16 mit ihren Köpfen bilden Anschlagmittel zur Begrenzung der gegenseitigen Verschwenkung des Trägers 12 und des Deckels 11. Wie in Fig. 1 und 4 dargestellt, liegen Sicherungsringe 16a in einer gegenüber einander verschwenkten Lage des Trägers 12 und des Deckels 1 an der Trägerplatte 13 an.

Der Schlitten 14 ist gegenüber der Trägerplatte 13 verschiebbar in Schienen 18 auf den beiden Seitenrändern der Trägerplatte 13 geführt. Der Schlitten 14 kann in Richtung des Doppelpfeiles 19 verschoben werden.

Zum Verschieben des Schlittens 14 dienen zwei auf beiden Seiten des Gestells 1 liegende Hebelvorrichtungen 20. Jede Vorrichtung 20 besteht aus einer Schwinge 21 und einem Hebel 23, die mittels unter dem Gestell 1 liegender Federmittel, die aus einer Zugfeder 25 bestehen, miteinander verbunden sind. Die Schwinge 21 nimmt in der in Fig. 1 dargestellten Lage gegenüber dem Gestell 1 eine Schräglage ein, die der Schräglage des Deckels 11 entgegengesetzt ist, und ist mittels eines Gelenkes 27 am Schlitten 14 und mittels eines weiteren Gelenkes 29 am Gestell 1 angelenkt. Darüber hinaus weist die Schwinge 21 einen Ausleger 31 auf, der sich senkrecht zu der Mittellinie 33 der Schwinge 21 bis unter das Gestell 1 erstreckt.

Der Hebel 23 ist im Bereich des Gelenkes 9 am Deckel 11 befestigt und erstreckt sich von dem Deckel bis unter das Gestell 1. Freie Enden 35 und 37 des Hebels 23 bzw. des Auslegers 31 befinden sich beide unterhalb einer gedachten Linie, die die Gelenke 9 und 29 verbindet. Ihre freien Enden 35 und 37 werden mittels einer in Ösen 39 eingehängten Zugfeder 25 zusammengezogen.

Jede Hebelvorrichtung 20 ist auf die obenstehend beschriebene Art und Weise derart ausgebildet, dass ein Endteil 41 der Schwinge 21 beim von dem Plattenteller 3 Wegschwenken des Deckels 11 in Richtung eines Pfeiles 43 über das Gelenk 27 den Schlitten 14 in Fig. 1 entsprechend dem Pfeil 19 nach rechts verschiebt, während der Schlitten 14 beim Schliessen des Deckels 11 in Richtung eines Pfeiles 45 in der entgegengesetzten Richtung nach links verschiebt. Eine Führung im Bereich der Seitenwände 47 des Schlittens 14 ist derart ausgelegt, dass ein in Richtung eines Pfeiles 49 in einen Schacht 51 zwischen der Trägerplatte 13 und dem Schlitten 14 geschobene Informationsträgerplatte 2 beim Schliessen des Deckels 11 in Richtung des Pfeiles 45 mit dem zentralen Loch der Informationsträgerplatte 2 genau auf die Zentrierung 4 des Plattentellers 3 gelangt. In einem Öffnungsschlitz 53 im Schacht 51 kann die Informationsträgerplatte 2 erfasst und ausgewechselt werden, wenn der Deckel 11 sich in der in Fig. 1 dargestellten aufgeschwenkten Lage befindet.

Wie in den Fig. 2 bis 4 dargestellt, ist am Deckel 11 des Plattenspielers federnd ein Plattenandrücker 55 angeordnet, der mittels einer Wendeldruckfeder 57 gegen einen Anschlagring 59 auf den Deckel gedrückt wird und sich durch eine Öffnung in der Trägerplatte 13 erstreckt.

Weiterhin ist mit dem Deckel 11 mindestens ein Andrückwinkel 61 fest verbunden, der in Richtung des Gestells 1 aus dem Deckel herausragt. Die Unterseite 63 des Andrückwinkels 61 bildet ein Anschlagelement für die Schwenkbewegung des Deckels 11. Vorzugsweise ist auf beiden Seiten des Deckels 11 ein Andrückwinkel 61 vorhanden, aber zum Verständnis der Erfindung reicht die Beschreibung der Konstruktion auf nur einer Seite des Deckels aus.

Am Gestell 1 ist ein durch einen Schieber 65 gebildetes Verriegelungselement in Richtung eines Doppelpfeiles 67 verschiebbar gelagert. Der Schieber 65 ist auf einer Seite mit einem Druckknopf 69 versehen, mit dem es möglich ist, ihn von aussen her zu betätigen und einzudrücken. In einer Längsnut 71 des Schiebers 65 befindet sich unter Vorspannung eine Drahtfeder 72. Durch die Vorspannung und die Breite der Nut 71 wird die Drahtfeder 72 in der Nut 71, wie in Fig. 2 ersichtlich, in Richtung des Andrückwinkels 61 verschoben liegen.

Fig. 2 zeigt den Deckel 11 während der Andrückphase der Schwenkbewegung des Deckels, wobei durch Ausübung von Druck in Richtung des Pfeiles 73 der Deckel möglichst weit auf den Plattenteller 3 gedrückt wird und an der Trägerplatte 13 anliegt. Dabei drückt der Plattenandrücker 55 die Informationsträgerplatte 2 auf dem Plattenteller 3 fest. Der Andrückwinkel 61 ist in der in Fig. 2 dargestellten ersten Stellung mit der Unterseite 63 während der Schwenkbewegung entsprechend dem Pfeil 45 in der Andrückphase seitlich längs der Drahtfeder 72 niedergegangen. Dies war dadurch möglich, dass der Schieber 65 in einem früheren Stadium der Andrückphase in die in Fig. 2 dargestellte Lage gebracht wurde, und zwar mittels eines schrägen Teiles 75 an einer mit dem Schlitten 14 verbundenen Verriegelungsplatte 77, die den Schieber 65 entgegen der Federkraft einer nicht dargestellten Feder in Richtung des Pfeiles 67 nach links geschoben hat.

Gelangt der Schieber 65 nun in den Bereich einer Ausnehmung 78 der Verriegelungsplatte 77, so bewegt sich der Schieber durch die nicht dargestellte Feder in Richtung des rechten Pfeiles 67 nach rechts aussen, und die Drahtfeder 72 rückt, wie in Fig. 3 dargestellt, gegen eine Seite 79 des Andrückwinkels 61. Dabei wird der Träger 12 durch die Verriegelungsplatte 77 verriegelt. Dies erfolgt am Ende der Andrückphase beim Erreichen der Andrückstufe. Wird nun der Druck in Richtung des Pfeiles 73 beendet, so bewegt die in Fig. 1 dargestellte Feder 25 in der Hebephase der Schwenkbewegung den Deckel 11 in Richtung des Pfeiles 43 von der Informationsträgerplatte 2 weg, wobei sich der Plattenandrücker 55 von der Informationsträgerplatte abhebt. In der Anhebephase des Deckels hebt sich auch der Andrückwinkel 61 entsprechend dem Pfeil 43, und die Drahtfeder 72, die zunächst entsprechend Fig. 3 in der Nut 71 nach links verschoben wurde, wird frei von der Seite 79 des Andrückwinkels 61 und kann sich nach rechts zurückschieben. Auf diese Weise rutscht die Drahtfeder 72 in der Anhebestufe am Ende der Anhebephase des Deckels nach Fig. 4 in eine zweite Lage, wo sie als Riegel in der Schwenkbahn der Unterseite 63 des Andrückwinkels 61 zu liegen kommt. Dadurch ist es nicht mehr möglich, den Deckel 11 aus der Anhebestufe abermals zum Plattenteller hin niederzudrücken, weil dies durch die als Riegel wirksame Drahtfeder 72 verhindert wird. In der Anhebestufe nach Fig. 4 liegt der Deckel 11 durch die Anschlagmittel 16 auf der Trägerplatte 13 positioniert und, wie in Fig. 1, nahezu parallel zu und in einem Abstand von der Trägerplatte 11. Ein erneutes Eindrücken der Taste 67 ermöglicht es, den Träger 12 zu entriegeln und den Deckel in die Lage nach Fig. 1 hochzuschwenken.

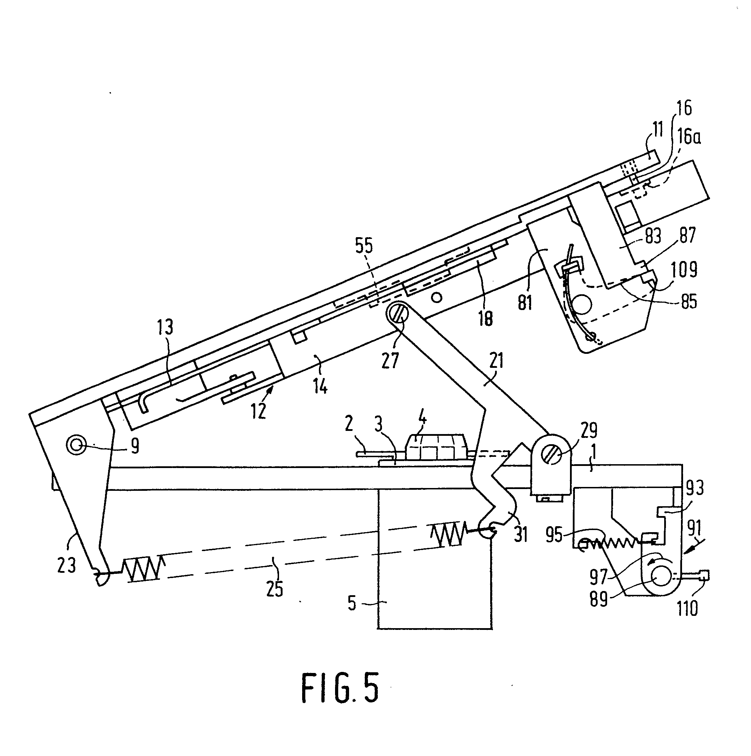

In den Fig. 5 bis 7 ist eine zweite Ausführungsform eines Plattenspielers nach der Erfindung dargestellt, wobei in der ersten Ausführungsform entsprechende Teile mit denselben Bezugszeichen angegeben sind. Der Deckel 11 ist auch in diesem Fall mit einem Plattenandrücker 55 versehen, der jedoch nur auf schematische Weise dargestellt ist. Mit der Trägerplatte 13 sind auf beiden Seiten Verriegelungsplatten 81 fest verbunden, die sich in Richtung des Gestells 1 erstrecken. Der Deckel 11 trägt weiterhin einen sich ebenfalls in Richtung des Gestells 1 erstreckenden Andrückwinkel 83 mit einem ein Anschlagelement bildenden Unterrand 85. Der Unterrand 85 setzt sich in eine sich an den Andrückwinkel 83 anschliessende Nase 87 fort, die sich von dem Andrückwinkel 83 nach auswärts erstreckt und einen nicht dargestellten Endteil umfasst, der gegenüber dem Andrückwinkel 83 abgewinkelt ist.

An dem Gestell 1 ist mittels einer Gelenkachse 89 ein Verriegelungselement 91 drehbar angeordnet. Das Verriegelungselement 91 hat einen in Fig. 5 aus der Zeichenebene herausstehenden Riegel 93. Das Verriegelungselement 91 wird mittels einer Feder 95 in Richtung entsprechend dem Pfeil 97 gegen einen nicht dargestellten Anschlag herangezogen.

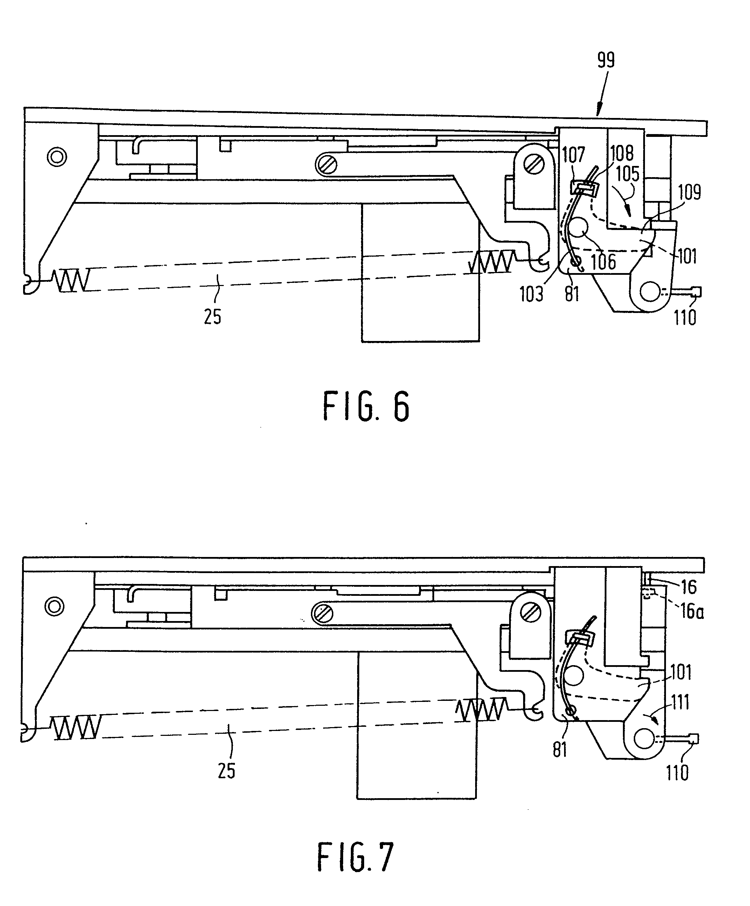

Wie in Fig. 6 dargestellt, ist der Deckel 11 in der Andrückphase beispielsweise mit der Hand in Richtung des Pfeiles 99 so weit niedergedrückt, dass der Plattenandrücker 55 gegen die Informationsträgerplatte 2 drückt. Dies ist die Andrückstufe. In dieser Andrückstufe hat der Vorsprung 87 eine Schwenkplatte 101 entgegen der Federkraft einer Feder 103 entsprechend dem Pfeil 105 um eine Achse 106 weggeschwenkt, die mit der Verriegelungsplatte 81 schwenkbar verbunden ist. Dafür ist in der Verriegelungsplatte 81 ein Führungsschlitz 107 vorhanden, durch den eine an der Schwenkplatte 101 vorgesehene Zunge 108 hindurchgreift. In der in Fig. 6 dargestellten Stellung ist die Schwenkplatte 101 so weit verschwenkt, dass die Zunge 108 am rechten Ende des Führungsschlitzes 107 anliegt. Der Riegel 93 ist, nachdem er in der Andrückphase mittels der Verriegelungsplatte 81 zunächst nach rechts in eine Wartestellung verschwenkt wurde, mit seinem unteren Rand eine kurze Wegstrecke über die Verriegelunkskante 109 der Verriegelungsplatte 81 geschwenkt.

Sobalt die Informationsträgerplatte 2 fest angedrückt ist, wird der Deckel 11 losgelassen, und es beginnt die Anhebephase des Deckels bis in seine ein wenig angehobene Stellung, die Anhebestufe. Die Feder 25 schwenkt den Deckel 11 mit dem Träger 12 so weit hoch, bis Anschlagmittel der Trägerplatte 13 diese kurze Anhebebewegung beenden (Fig. 7). Diese Anschlagmittel bestehen, wie bei der Ausführungsform nach den Fig. 2 bis 4, aus wenigstens einem Loch 15 in der Trägerplatte 13, durch die der am Deckel 11 befestigte Stift 16 hindurchgreift. Der auf der vom Deckel 11 abgelegenen Seite der Trägerplatte 13 vorgesehene Stiftkopf 16a gibt beim Auseinanderschwenken von Deckel 11 und Träger 13 die Länge des Anhebeweges an. Bei dieser kurzen Anhebebewegung hat sich der Riegel 93 nun zwischen den Vorsprung 87 und die Verriegelungskante 109 geschoben, in der die obere Wand des Riegels 93 unterhalb des Vorsprunges 87 zu liegen gekommen ist. Dies ist die Anhebestufe. Die Schwenkplatte 101 verbleibt in ihrer nach rechts verschwenkten Stellung, wie aus Fig. 7 ersichtlich ist. Durch dieses Zwischenschieben des Riegels 93 zwischen dem Vorsprung 87 und der Verriegelungskante 109 ist in der Anhebestufe gewährleistet, dass der Deckel 11, der den Plattenandrücker 55 trägt, nicht aus der Anhebestufe nach Fig. 7 abermals niedergedrückt werden kann, wodurch ein erneutes Andrücken der Platte erfolgen würde. Dabei sorgt die Schwenkplatte 101 dafür, dass das Verriegeln des Trägers 12 und das Verschieben des Riegels 93 bis unter den Vorsprung 87 in der Anhebestufe am Ende der Anhebephase erfolgt. In der in Fig. 7 dargestellten Anhebestufe des Deckels 11 kann der Abspielvorgang der Informationsträgerplatte beginnen, ohne dass die Gefahr besteht, dass der Plattenandrücker versehentlich bei laufender Platte gegen die Informationsträgerplatte stösst.

Zum Öffnen des Deckels 11 wird das Verriegelungselement 91 durch Betätigung der Taste 110 in Richtung des Pfeiles 111 nach Fig. 7 verschwenkt, so dass die Feder 25 den Deckel in die Offenstellung schwenken kann. Gleichzeitig schwenkt die Schwenkplatte 101 unter Wirkung der Feder 103 nach links zurück; der Riegel 93 kann danach nicht mehr unter den Vorsprung 87 rutschen.

Es sei bemerkt, dass die in der Zeichnung dargestellten Plattenspieler als Oberlader sowie als Frontlader eingesetzt werden können, d.h. mit einem in der geschlossenen Endlage horizontal bzw. vertikal liegenden Deckel.

## Patentansprüche

1. Plattenspieler für eine starre Informationsträgerplatte mit einem in einem Gestell drehbar gelagerten Plattenteller, der mittels eines mit dem Gestell schwenkbar verbundenen Deckels abschliessbar ist, der einen Plattenandrücker trägt, der beim vollständigen Niederdrücken des Deckels federnd gegen den Plattenteller drückbar ist, dadurch gekennzeichnet, dass der Schliessvorgang des Deckels (11) bis in die für den Spielbetrieb vorgesehene Stellung in zwei Bewegungsphasen bis zu einer Andrück- und einer Anhebestufe abläuft, und zwar derart, dass der Deckel (11) mit mindestens einem Anschlagelement (61, 85) in einer Andrückphase auf den Plattenteller (3) hin schwenkbar ist bis in die Andrückstufe, in der der Plattenandrücker (55) die Platte (2) gegen den Plattenteller (3) drückt, wobei der Deckel (11) in einer nach dem Erreichen der Andrückstufe sich vollziehenden abschliessenden Anhebephase durch mit dem Deckel (11) gekuppelte Federmittel (25) vom Plattenteller wieder wegschwenkt bis in die Anhebestufe, in der der Deckel (11) mittels Anschlagmitteln (15, 16, 16a) positioniert wird und in welcher Anhebestufe der Plattenandrücker (55) die Platte (2) freigibt und ein gegenüber dem Gestell (1) beweglicher Riegel (72, 93) in die Niederschwenkbahn des Anschlagelementes (61, 85) gelangt, wodurch der Riegel (77, 93) den Deckel (11) daran hindert, in die Andrückstufe zurückzukehren.

2. Plattenspieler nach Anspruch 1, dadurch gekennzeichnet, dass schwenkbar am Gestell (1) ein Träger (12) angeordnet ist, der in der Andrückphase mit dem Deckel auf den Plattenteller (3) geschwenkt wird und der eine Verriegelungsplatte (77, 81) trägt, die in der Andrückstufe mittels eines mit dem Gestell (1) verbundenen Verriegelungselementes (65, 91) verriegelt wird, welcher Träger (12) einen Teil (15) der Anschlagmittel (15, 16, 16a) aufweist, die das erneute Anheben in der Anhebephase des Deckels (11) auf dem Weg bis zum Erreichen der Anhebestufe begrenzen und den Deckel (11) in der Anhebestufe positioniert halten.

3. Plattenspieler nach Anspruch 2, dadurch gekennzeichnet, dass das Verriegelungselement (65, 91) den Riegel (72, 93) trägt und in der Andrückphase des Deckels (11) mittels der Verriegelungsplatte (77) das Verriegelungselement (65, 91) derart verschoben wird, dass der Riegel (72, 93) zunächst in eine Wartestellung bewegt und in der folgenden Anhebephase unter Federkraft so zurückgestellt wird, dass er sich unterhalb der Anschlagelemente (61, 85) schiebt und den Niederdrückweg des Deckels (11) bis in die Andrückstufe blockiert.

4. Plattenspieler nach Anspruch 3, dadurch gekennzeichnet, dass der Riegel (93) an einem federnd ausschwenkbaren Verriegelungselement (91) ausgebildet ist (Fig. 5 bis 7).

5. Plattenspieler nach den Ansprüchen 1 und 3, dadurch gekennzeichnet, dass der Riegel (72) als biegsames Federelement an dem als Schieber (65) ausgebildeten Verriegelungselement angeordnet ist (Fig. 2 bis 4).

6. Plattenspieler nach den Ansprüchen 2 bis 4, dadurch gekennzeichnet, dass das Verriegelungselement (65) mit einer Taste (69) versehen ist zum Entriegeln des Trägers (12) und zum Öffnen des Deckels (Fig. 2 bis 4).

7. Plattenspieler nach einem der Ansprüche 2 oder 3, dadurch gekennzeichnet, dass der Riegel (93) an zwei einander gegenüberliegenden Seiten eine erste und eine zweite Wand aufweist, wobei die erste Wand des Riegels (93) in der Anhebestufe die Verriegelungsplatte (81) des Trägers verriegelt hält und beide Wände in der Anhebestufe zwischen dem Unterrand (85) des Anschlagelementes (83) und einer Verriegelungskante (109) der Verriegelungsplatte (81) zu liegen kommen und dadurch verhindern, dass der Deckel (11) in die Andrückstufe zurückkehrt (Fig. 5 bis 7).

## Claims

1. A disc player for a rigid information-carrying disc, which player comprises a turntable which is mounted for rotation on a chassis and a lid for closing the player, which lid is pivotally connected to the chassis and carries a disc loader which, when the lid has been pivoted completely towards the turntable, acts resiliently on the turntable, characterized in that during closure of the lid (11) into the position for playing the lid performs a pivotal movement in two stages and, the lid (11) carries at least one stop element (61, 85) and in the loading stage can be pivoted towards the turntable (3), and in the lifting stage subsequent to the loading stage the lid is pivoted away from the turntable by resilient means (25) which are coupled to the lid (11) into a final position in which the lid (11) is positioned by stop means (15, 16, 16a) in which the disc loader (55) is clear of the disc (2), and in which a latch (72, 93) which is movable relative to the chassis (1) moves to a position in the pivotal path of the stop element (61, 85) and inhibits a return of the lid (11) to the loading stage.

2. A disc player as claimed in Claim 1, characterized in that a carrier (12) is pivotally connected to the chassis (1) and in the loading stage is pivoted with the lid towards the turntable (3), which carrier carries a latching plate (77, 81) which in the loading stage is latched by a latching member (65, 91) which is connected to the chassis (1), said carrier (12) comprising a part (15) of the stop means (15, 16, 16a) which limit the pivotal movement of the lid (11) in the lifting stage when it is lifted again and keep the lid (11) in the final position in the lifting stage.

3. A disc player as claimed in Claim 2, characterized in that the latching member (65, 91) carries the latch (72, 93) and in the loading stage of the lid (11) is moved in such a way by the latching plate (77) that the latch (72, 93) is initially moved to a waiting position, and in the subsequent lifting stage the latching member is reset under spring force, the latch being moved undernear the stop element (61, 85) and inhibiting a return of the lid (11) to the loading stage.

4. A disc player as claimed in Claim 3, characterized in that the latch (93) is formed on a resiliently deflexible latching member (91). (Figs. 5 to 7).

5. A disc player as claimed in Claims 1 and 3, characterized in that the latch (72) in the form of a deflexible spring element is arranged on the latching member which is constructed as a slide (65). (Figs. 2 to 4).

6. A disc player as claimed in any of Claims 2 to 4, characterized in that the latching member (65) is provided with a button (69) for releasing the carrier (123) and opening the lid. (Figs. 2 to 4).

7. A disc player as claimed in Claim 2 or 3, characterized in that the latch (93) comprises a first and a second wall on opposite sides, the first wall (93) keeping the latching plate (81) of the carrier latched in the lifting stage and both walls being situated between the lower edge (85) of the stop element (83) and a latching edge (109) of the latching plate (81), thereby inhibiting a return of the lid (11) to the loading stage. (Figs. 5 to 7).

## Revendications

1. Tourne-disque pour un disque de support d'information rigide comportant un plateau à disque qui est monté à rotation dans un bâti et qui peut être coiffé d'un couvercle articulé au bâti, ce couvercle portant un presseur de disque qui, lorsque le couvercle est complètement abaissé, peut être pressé élastiquement contre le plateau à disque, caractérisé en ce que l'opération de fermeture du couvercle (11) jusqu'à la position prévue pour la lecture se déroule en deux phases de mouvement allant jusqu'à un état appuyé et un état soulevé, et ce d'une manière telle que le couvercle (11) puisse pivoter, au cours d'une phase de pression, avec au moins un élément de butée (61, 85) sur le plateau à disque (3), jusqu'à l'état appuyé, dans lequel le presseur de disque (55) presse le disque (2) contre le plateau à disque (3), le couvercle (11) s'écartant, au cours d'une phase de levage suivante s'effectuant après l'obtention de l'état appuyé, à nouveau par pivotement du plateau à disque suite à l'intervention de moyens élastiques (25) couplés au couvercle (11) jusqu'à l'état soulevé dans lequel le couvercle (11) est positionné à l'aide de moyens de butée (15, 16, 16a) et dans lequel le presseur de disque (55) libère le disque (2), tandis qu'un verrou (72, 93) mobile par rapport au bâti (1) parvient dans le trajet de pivotement vers le bas de l'élément de butée (61, 85) et empêche ainsi le couvercle (11) de revenir à l'état appuyé.

2. Tourne-disque suivant la revendication 1, caractérisé en ce que sur le bâti (1) est monté à pivot un support (12) qui, dans la phase de pression, pivote avec le couvercle sur le plateau à disque (3) et qui porte une plaque de verrouillage (77, 81) qui, dans l'état appuyé, est verrouillée au moyen d'un élément de verrouillage (65, 91) relié au bâti (1), ce support (12) présentant une partie (15) des moyens de butée (15, 16, 16a) qui limitent un nouveau levage du couvercle (11) dans la phase de levage au trajet allant jusqu'à l'obtention de l'état soulevé et maintiennent le couvercle (11) en position à l'état soulevé.

3. Tourne-disque suivant la revendication 2, caractérisé en ce que l'élément de verrouillage (65, 91) porte le verrou (72, 93) et, pendant la phase de pression du couvercle (11), l'élément de verrouillage (65, 91) est déplacé au moyen de la plaque de verrouillage (77), d'une manière telle que le verrou (72, 93) soit déplacé d'abord dans une position d'attente et soit ensuite, dans la phase de levage suivante, rappelé par une force élastique de telle sorte qu'il se glisse en dessous des éléments de butée (61, 85) et bloque le trajet d'abaissement du couvercle (11) jusqu'à l'état appuyé.

4. Tourne-disque suivant la revendication 3, caractérisé en ce que le verrou (93) est formé sur un élément de verrouillage (91) pouvant pivoter élastiquement vers l'extérieur (Fig. 5 à 7).

5. Tourne-disque suivant les revendications 1 et 3, caractérisé en ce que le verrou (72) est prévu sous forme d'un élément élastique flexible sur l'élément de verrouillage ayant la forme d'un coulisseau (65) (Fig. 2 à 4).

6. Tourne-disque suivant les revendications 2 à 4, caractérisé en ce que l'élément de verrouillage (65) est pourvu d'une touche (69) servant à déverrouiller le support (12) et à ouvrir le couvercle (Fig. 2 à 4).

7. Tourne-disque suivant l'une ou l'autre des revendications 2 et 3, caractérisé en ce que le verrou (93) présente des deux côtés opposés l'un à l'autre une première et une seconde paroi, telles que la première paroi du verrrou (93) maintient la plaque de verrouillage (81) du support verrouillée à l'état soulevé et que les deux parois viennent se placer, à l'état soulevé, entre le bord inférieur (85) de l'élément de butée (83) et un bord de verrouillage (109) de la plaque de verrouillage (81) et empêchent ainsi que le couvercle (11) revienne à l'état appuyé (Fig. 5 à 7).

FIG.1

FIG. 2

FIG.3

FIG.4

FIG.5

FIG. 6

FIG.7